# EUROPÄISCHE PATENTANMELDUNG

(11) **EP 1 450 093 A1**
(43) Veröffentlichungstag der Anmeldung: **25.08.2004**
(21) Anmeldenummer: 04100498.7
(22) Anmeldetag: 10.02.2004
(51) Int. Cl.: F16L 11/12, G02B 6/44, G02B 6/20

(54) **Flexibler Druckmittelschlauch mit Mitteln zur Datenübertragung zwischen Pneumatikkomponenten**

(30) Priorität: 24.02.2003 DE 10307985
(71) Anmelder: Rexroth Mecman GmbH, 30880 Laatzen (DE)
(72) Erfinder: Krebs, Herbert, 30823 Garbsen (DE); Brandes, Wolfgang, 30419 Hannover (DE); Fortmann, Norbert, 30163 Hannover (DE); Meyer, Ernst-August, 30974 Wennigsen (DE); Liesenhoff, Thomas, 30159 Hannover (DE)
(74) Vertreter: Kietzmann, Lutz

(57) **Zusammenfassung**

Der Gegenstand der vorliegenden Erfindung betrifft einen flexiblen Druckmittelschlauch (1) sowie eine Vorrichtung zur Druckmittel- und/oder Datenübertragung (7) zur Übertragung eines Druckmittels umfassend einen flexiblen Druckmittelschlauch (1) mit einer Druckmittelschlauchummantelung (3), der außerdem Mittel zur Datenübertragung in axialer Richtung zur Druckmittelschlauchachse (2) umfasst, wobei die Druckmittelschlauchummantelung (3) als eine homogene Schicht ausgebildet ist, durch welche in Lichtwellen kodierte Daten übertragbar sind, wobei die homogene Schicht aus einem flexiblen Lichtwellenleitermaterial besteht und an jedem Ende des flexiblen Druckmittelschlauchs (1) eine Kopplungseinheit (8) zur Verbindung des flexiblen Druckmittelschlauchs (1) mit weiteren Komponenten insbesondere pneumatischen Bauteilen angeordnet sind, wobei die Kopplungseinheit (8) als Stoffanschluss mit integrierter Kommunikationseinrichtung (11) ausgebildet ist.

## Beschreibung

Flexibler Druckmittelschlauch zur Übertragung eines Druckmittels mit einer Druckmittelschlauchummantelung, der außerdem Mittel zur Datenübertragung in axialer Richtung zur Druckmittelschlauchachse umfasst, sowie eine Vorrichtung umfassend diesen.

Derartige flexible Druckmittelschläuche kommen üblicherweise in der Automationstechnik, genauer in der Fluidtechnik, überall dort zum Einsatz, wo eine Übertragung von Druckmitteln, beispielsweise zur Steuerung von Anlagen mittels Ventilen, Zylindern und/oder Schaltern benötigt wird. Zur Steuerung werden dabei neben der mittels des Druckmittels übertragenen Energie in Form eines Drucks zusätzlich weitere Daten zur Steuerung, Schaltung, Regelung, Überwachung etc. benötigt beziehungsweise übertragen. Bei den Druckmitteln unterscheidet man zwischen verschiedenen Arten von Druckmitteln. In dem hier vorliegenden Anwendungsgebiet werden hauptsächlich pneumatische Druckmittel - Druckluft - übertragen. Die Druckluft wird dabei im Wesentlichen über die flexiblen Druckmittelschläuche übertragen, die eine örtlich flexible Energieübertragung auch zu komplexen und schwer zugänglichen, pneumatisch betriebenen Bauteilen oder Komponenten, auch Pneumatikbauteile beziehungsweise Pneumatikkomponenten, ermöglichen. Die Daten werden meist in Form von elektrischen Signalen über zusätzliche, den elektrischen Strom leitende, Verbindungen, Kabel, Drähte und dergleichen übertragen. Die Übertragung von Druckmittel und Daten ist nach bisherigem Stand der Technik innerhalb eines gemeinsamen Mediums dabei nicht effektiv möglich, da hierbei noch zu viele Störungen auftreten und es so nur zu einer sehr unzuverlässigen und zufälligen Übertragung kommt. Aus diesem Grund werden für die Datenübertragung und für die Druckmittelübertragung jeweils separate Leitungen oder Übertragungskanäle benötigt.

Aus der DE 297 09 748 U1 ist ein oberbegrifflicher flexibler Druckmittelschlauch bekannt. Dieser besteht aus einem Energieleiter zur Übertragung von Steuer- und Speiseenergie sowie - signalen, wobei der Energieleiter als Hybridleiter ausgeführt ist und mindestens eine druckdichte Fluidleitader, mindestens eine elektrische Le itader und/oder mindestens eine Lichtleitader sowie mindestens einen den Fluidleiter fluid- und druckdicht bildenden und die anderen Adern einstückig umschließenden Schlauch aufweist.

Bei dem bekannten Druckmittelschlauch tritt der Nachteil auf, dass die Anzahl der für den Aufbau des Energieleiters benötigten Komponenten hoch ist und die (einstückige) Fertigung des Schlauches zur dichten Umschließung aller Komponenten sehr aufwendig ist. Insbesondere die komplexen Querschnitte sowie die Einarbeitung eines Leiters in den Schlauch erfordern einen sehr hohen Aufwand bei der Herstellung solcher Energieleiter. Aufgrund der komplexen Querschnittsgeometrien ist die Anbindung oder die Kopplung des bekannten Druckmittelschlauchs an anzubindene Komponenten äußerst aufwending. Hier fehlt eine einfache und zuverlässige Verbindungseinheit zum Koppeln des Energieleiters an weitere Bauteile.

Es ist daher eine Aufgabe der vorliegenden Erfindung, einen flexiblen Druckmittelschlauch zu schaffen, bei dem die Anzahl der zur Stoff /Energie- und Signalübertragung benötigten Komponenten reduziert beziehungsweise minimiert ist und die Fertigung des Schlauches mit einem geringen Aufwand möglich ist.

Diese Aufgabe wird ausgehend von einem flexiblen Druckmittelschlauch gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die technische Erfindung schließt die technische Lehre ein, dass die Druckmittelschlauchummantelung als eine homogene Schicht ausgebildet ist, durch welche in Lichtwellen kodierte Daten übertragbar sind, wobei die homogene Schicht aus einem flexiblen Lichtwellenleitermaterial besteht.

Diese Lösung bietet den Vorteil, dass durch die Ausbildung der Druckmittelschlauchummantelung als homogene Schicht, die Druckmittelschlauchummantelung einfach herzustellenden ist, ohne dass Anformungen und/oder Ausformungen zum Umfassen von in die Druckmittelschlauchummantelung eingefassten, eingebrachten oder anderswie integrierten Daten- oder Signalleitern notwendig sind. Dadurch, dass die Druckmittelschlauchummantelung aus einem flexiblen Lichtwellenleitermaterial hergestellt ist, entfallen zusätzliche Komponenten, beispielsweise zusätzlich in die Ummantelung einzubringende Lichtwellenleiter oder andere Datenleiter.

Hierdurch ist der Herstellungsaufwand auf ein Minimum reduziert. Komplexe Querschnitte um den Druckmittelschlauch einstückig herzustellen, entfallen, da auf komplexe Querschnitte mit Stegen und/oder Anformungen, in welchem gegebenenfalls noch Datenleiter eingefasst sind, entfallen können und statt dessen einfache oder einfachere Querschnitte wie beispielsweise kreisförmige Querschnitte verwendet werden können.

Vorzugsweise handelt es sich bei dem in beziehungsweise durch den Druckmittelschlauchinnenraum übertragene Druckmittel um Druckluft zum Betreiben eines pneumatischen Bauteils oder mehrerer pneumatischer Bauteile oder einer oder mehrerer Pneumatikkomponenten. Prinzipiell ist aber auch ein Einsatz von anderen Druckmitteln oder allgemein Fluiden wie beispielsweise hydraulischen Fluiden möglich. Bei pneumatischen Bauteilen im Sinne der Erfindung handelt es sich um alle in der Pneumatik einsetzbaren Bauteile und Komponenten, die in irgendeiner Weise Druckluft zu Funktionserfüllung benötigen. Beispiele für pneumatische Bauteile sind insbesondere pneumatisch betriebene Ventile, Zylinder und/oder Schaltern.

Eine vorteilhafte Ausführungsform sieht vor, dass die Druckmittelschlauchummantelung eine Außenseite und eine Innenseite aufweist, wobei die in Lichtwellen kodierten Daten im Wesentlichen innerhalb der Druckmittelschlauchummantelung zwischen der Innenseite und der Außenseite verlaufen. Auf diese Weise sind die Lichtwellen gut im Inneren der Druckmittelschlauchummantelung abgeschirmt von den den Lichtwellenleitern umgebenden Medien, so dass die Datenübertragung ungestört, unbeeinflusst und zuverlässig durchführbar ist. Auf diese Weise ist durch die Abschirmung eine optimale Datenübertragung mit einer sehr hohen Datendurchflussrate bereitgestellt, was zu einem geringeren Energieaufwand der Übertragung führt, da keine energieverbrauchenden Senken beispielsweise durch Störeinflüsse vorhanden sind, so dass insgesamt eine hohe Effektivität der Datenübertragung gewährleistet ist.

Entsprechend ist es von Vorteil, dass die Innenseite der Druckmittelschlauchummantelung so ausgebildet ist, dass das Druckmittel nicht durch die Innenseite in die homogene Schicht der Druckmittelschlauchummantelung gelangen kann, um eine Trennung zwischen Datenübertragung und Druckmittelübertragung zu realisieren. Da aufgrund der gegenseitigen, negativen Beeinflussung beziehungsweise der gegenseitigen Störeinflüsse von Druckmittelübertragung und Datenübertragen beziehungsweise Druckmittel und Datenübertragungsmittel eine gemeinsame Übertragung innerhalb eines gemeinsamen Mediums, innerhalb eines gemeinsamen Leiters oder einer gemeinsamen Schicht technisch nicht, schwer, uneffektiv oder nur unter einem sehr hohen, unwirtschaftlichen Aufwand möglich ist, hat es sich als vorteilhaft herausgestellt, die Datenübertragung und die Stoffübertragung in verschiedenen, getrennten oder voneinander abgeschirmten Leitern, Schichten beziehungsweise Medien zu realisieren. Aufgrund der gegenseitigen negativen Beeinflussung muss zwischen den verschiedenen Medien oder Schichten eine Grenze beispielsweise in Form einer Oberfläche oder auch Grenzoberfläche beziehungsweise Außenseite und/oder Innenseite vorhanden sein, die verhindert, dass das Druckmittel und die Daten sich gegenseitige negativ beeinflussen. Da das Druckmittel im Inneren des Druckmittelschlauchs oder in dem Druckmittelschlauchinnenraum übertragen wird und die Datenübertragung in der Druckmittelschlauchummantelung erfolgt, bildet die Innenseite diese Grenzschicht oder Grenzoberfläche. Durch eine entsprechende Ausbildung ist auf einfache Weise eine die Datenübertragung und die Druckmittelübertragung trennende Oberfläche realisierbar.

In gleicher Weise ist es von Vorteil, dass die Außenseite der Druckmittelschlauchummantelung so ausgebildet ist, dass das den flexiblen Druckmittelschlauch umgebende Medium nicht durch die Außenseite in die homogene Schicht der Druckmittelschlauchummantelung gelangen kann, um eine Trennung zwischen Datenübertragung und umgebenden Medium zu realisieren. Handelt es sich bei dem umgebenden Medium um das gleiche Medium, das auch als Druckmittel verwendet ist, so gilt das im vorstehenden Absatz für die Innenseite genannte analog auch für die Außenseite. Weicht das umgebende Medium jedoch von dem Druckmittel, welches im Druckmittelschlauchinnenraum übertragen wird ab, oder handelt es sich um ein gänzlich anderes Medium, so ist die entsprechende Außenseite entsprechend verändert auszuführen. Durch die entsprechende Ausbildung der Außenseite kann der Druckmittelschlauch auch unter Wasser oder in anderen Medien verwendet werden, ohne dass die Funktionsweise hierbei beeinträchtigt ist. Auf diese Weise ist ein breites Spektrum an Anwendungsmöglichkeiten und Einsatzgebieten realisierbar.

Eine weitere die Erfindung verbessernde Maßnahme sieht vor, dass die Druckmittelschlauchummantelung im Wesentlichen konzentrisch um die Druckmittelschlauchachse ausgebildet ist. Auf diese Weise lässt sich der Druckmittelschlauch einfacher gegenüber beispielsweise einer exzentrischen Anordnung von Druckmittelschlauchummantelung und Druckmittelschlauchachse herstellen. Es ist jedoch durchaus denkbar, dass in einigen Fällen auch eine exzentrische Anordnung von Vorteil ist, beispielsweise wenn zusätzliche Ausformungen an dem Druckmittelschlauch vorgesehen sind. Diese stellen jedoch eher die Ausnahme da, so dass mit einer konzentrischen Anordnung der Druckmittelschlauchummantelung zur Druckmittclschlauchachsc ein Großteil der benötigten Anwendungsformen abgedeckt ist, wodurch in Verbindung mit der einfacheren Herstellung ein optimales Herstellungsverfahren ohne hohen Aufwand realisierbar ist.

Eine weitere vorteilhafte Ausführungsform des flexiblen Druckmittelschlauchs sieht vor, dass die Druckmittelschlauchummantelung in radialer Richtung zur Druckmittelschlauchachse eine über die Gesamtlänge des flexiblen Druckmittelschlauchcs im Wesentlichen konstante Schichtdicke aufweist, um einen gleichmäßigen Daten- und/oder Druckmittelfluss zu gewährleisten. Prinzipiell ist auch jede andere Schichtdicke beziehungsweise Wanddicke möglich. So kann zum Beispiel die Wanddicke kontinuierlich reduziert oder erhöht werden. Auch ist eine beliebige variable Wanddicke entsprechend dem Einsatzgebiet möglich. So kann zum Beispiel in Bereichen, in denen eine hohe Flexibilität erforderlich ist, die Wandstärke reduziert sein, damit sich der Druckmittelschlauch leichter deformieren lässt und so an die äußeren Gegebenheiten besser anpassen lässt. Andererseits kann in Bereichen, in denen eine hohe Belastung des Druckmittelschlauchs auftritt, sei es durch äußere oder durch innere Einflüsse, eine dickere Wandstärke beziehungsweise Schichtdicke vorgesehen werden, um eine höhere Stabilität, Festigkeit oder Steifigkeit zu erzielen. Für die einfache Herstellung eines flexiblen Druckmittelschlauchs ist es jedoch von Vorteil, dass die Wandstärke über die gesamte Schlauchlänge konstant ist, da so keine aufwendig programmierten Fertigungsverfahren insbesondere in der Serienfertigung programmiert oder installiert werden müssen und somit auch weniger aufwendige Fertigungsmaschinen benötigt werden.

Zudem ist es vorteilhaft, dass der Druckmittelschlauchinnenraum eine zylindrische beziehungsweise kreisförmige Querschnittsfläche aufweist, um einen konstanten Druckmittelfluss zu gewährleisten. Aus dem zylindrischen Querschnitt und einer konstanten Wandstärke beziehungsweise Schichtdicke ergibt sich zwangsläufig ein hohlzylindrischer oder hohlkreisförmiger Querschnitt der Schlauchummantclung. Insgesamt kann sowohl der Druckmittelschlauchinnenraum wie auch die Druckmittelschlauchummantelung jeden beliebigen Querschnitt annehmen. Dabei müssen Druckmittelschlauchummantelung und Druckmittelschlauchinnenraum keine korrespondierenden Querschnitte, das heißt zylindrischer und hohlzylindrischer oder quadratischer und hohlquadratischer Querschnitt, aufweisen. Es ist vielmehr auch denkbar, dass beispielsweise der Druckmittelinnenraum einen zylindrischen Querschnitt und die Druckmittelummantelung einen quadratischen Querschnitt aufweisen. Weiterhin ist es auch denkbar, dass der Querschnitt über die Druckmittelschlauchachse variabel veränderbar ist. So kann sich zum Beispiel der Querschnitt des Druckmittelschlauchinnenraums in Strömungsrichtung des Druckmittels verjüngen. Der Querschnitt der Druckmittelschlauchummantelung kann unabhängig von dem Querschnitt des Druckmittelschlauchinnenraums ausgebildet sein. Als vorteilhaft im Hinblick auf die Strömungsverhältnis des Druckmittels im Druckmittelschlauchinnenraums hat sich jedoch herausgestellt, dass der beste Nutzungs- und/oder Wirkungsgrad bei über die Druckmittelschlauchachse zylindrischen Querschnitten erzielt wird. Zudem ist dieser Querschnitt in der Herstellung mit dem geringsten Aufwand zu fertigen und bietet im Verhältnis zu anderen Geometrien den größten Flächen- beziehungsweise Volumeninhalt im Verhältnis zum Umfang oder zur Mantelfläche, so dass diese Ausbildung der Querschnittsfläche gegenüber anderen Geometrien bei gleichem Durchfluss das geringste Bauvolumen benötigt.

Eine weitere Aufgabe der vorliegenden Erfindung ist es, eine Vorrichtung zur Daten- und Stoffübertagung zu schaffen, wobei eine einfache, sichere und zuverlässige Kopplung zur Anbindung an weitere Komponenten oder Bauteile, etwa Pneumatikkomponenten oder Pneumatikbauteile, realisiert ist.

Diese Aufgabe wird ausgehend von einer Vorrichtung zur Daten- und Stoffübertragung gemäß dem Anspruch 9 gelöst. Vorteilhafte Weiterbildungen der Erfindung sind in den hierauf abhängigen Ansprüchen angegeben.

Die Erfindung offenbart eine Vorrichtung zur Druckmittel- und/oder Datenübertragung umfassend einen erfindungsgemäßen flexiblen Druckmittelschlauch nach Anspruch 1 bis 9, wobei an jedem Ende des flexiblen Druckmittelschlauch eine Kopplungseinheit zur Verbindung des flexiblen Druckmittelschlauchs mit weiteren Komponenten insbesondere pneumatischen Komponenten angeordnet ist, wobei die Kopplungseinheit als Stoffanschluss mit integrierter Kommunikationseinrichtung ausgebildet ist.

Auf diese Weise lässt sich der erfindungsgemäße flexible Druckmittelschlauch auf einfache Weise über eine Kopplungseinheit mit weiteren pneumatischen Bauteilen oder pneumatischen Komponenten verbinden. Pneumatische Bauteile können jede Art von pneumatischen Bauteilen wie pneumatisch betriebene Ventile, Zylinder, Schaltern bis hin zu ganzen pneumatisch betriebenen Großanlagen sein. Die Kopplungseinheit ist vorzugsweise quaderförmig aufgebaut, um einen einfachen modularen Aufbau zu gewährleisten. Durch entsprechende Ausbildung der Kopplungseinheit ist so eine leicht zu montierende und universell an jedem genormten Bauteil anzuordnende erfindungsgemäße Vorrichtung bereitgestellt. Die Kopplungseinheit kann dabei sowohl als selbständiges Bauteil, als auch als eine in ein pneumatisches Bauteil integrierte Komponente ausgebildet sein. Weiterhin lassen sich so auch mehrere Vorrichtungen zur Stoff- und Datenübertragung hintereinander, das heißt seriell oder in Reihe, wie auch, bei entsprechender Ausbildung, nebeneinander oder parallel sowie in einer Kombination von Serien- und Reihenschaltung zu einer komplexeren Einrichtung anordnen, so dass beispielsweise eine Stoff- und Datenübertragung auch über größere Entfernungen oder längere Strecken erfolgen kann.

Eine weitere die Erfindung verbessernde Maßnahme sieht vor, dass die Kommunikationseinrichtung der Kopplungseinheit mindestens einen optischen Sender und mindestens einen optischen Empfänger aufweist, um eine bidirektionale Datenkommunikation zwischen mehreren Kopplungseinheiten zu realisieren. Auf diese Weise lässt sich mittels eines Sensors, vorzugsweise eines optischen Sensors, ein Ist-Wert erfassen, welcher mittels eines Senders, vorzugsweise eines optischen Senders, optisch an einen Empfänger übertragen wird. Dabei ist man nicht auf die Codierung der Daten in optische Einheiten beschränkt. Vielmehr lassen sich Daten in jeglicher Codierung erfassen und weiterleiten. Diese müssen gegebenenfalls mittels entsprechender Konverter in geeignete Codierung weiter konvertiert werden. Die schnellste Übertragung realisiert man jedoch mit einer Codierung in optische Signale. Mit Hilfe des durch den Empfänger empfangen Signals lässt sich ein Soll-Ist-Vergleich durchführen. Das bei diesem Vergleich erzeugte Ergebnis kann als Signal über einen optischen Sender schnellstmöglich weitergeleitet oder zurückgeleitet werden, beispielsweise an ein Stellglied, welches entsprechend auf eine Stellgröße einwirkt. Mittels der bidirektionalen Datenkommunikation lässt sich somit auf einfache Weise eine Regelung beziehungsweise ein Regelkreis realisieren, der beispielsweise in einer übergeordnete Steuerung integriert ist.

Um eine möglichst schnelle und zuverlässige Datenübertragung bereitzustellen, ist es von Vorteil, dass der Sender als Infrarotsender und der Empfänger als Infrarotempfänger ausgebildet ist, um mittels Infrarotwellen kodierte Daten zu übertragen. Da Licht sich mit der schnellstmöglichen Geschwindigkeit ausbreitet, lässt sich für eine Datenübertragung mittels Infrarotwellen die schnellstmögliche Datenübertragung realisieren.

Dabei sieht eine bevorzugte Ausführungsform vor, dass der Sender und/oder der Empfänger der Kommunikationseinrichtung mindestens als eine Infrarotdiode ausgebildet ist, um in Infrarotwellen kodierte Daten zu übertragen. Eine Infrarotdiode kann dabei als Infrarotwellenemitter zum Erzeugen von Infrarotwellen oder als Infrarotwellenrezeptor zum Erkennen, Lesen, Erfassen oder auch Aufnehmen von Infrarotwellen ausgebildet sein. Eine Infrarotdiode stellt ein gängiges, handelsübliches Bauteil zur Erzeugung und Erfassen von Infrarotlichtwellen dar, welches leicht einzubauen ist und das aufgrund seiner geringen Baugröße wenig Bauraum innerhalb eines die Infrarotdiode umfassenden Systems beansprucht.

Weiterhin sieht ein vorteilhafte Maßnahme vor, dass der Stoffanschluss der Kopplungseinheit als ein Push-In-Fitting oder auch allgemein als Schnittstelle ausgebildet ist, um Druckluft zwischen Pneumatikkomponenten zur übertragen. Der Stoffanschluss kann allgemein entsprechend dem übertragenen Medium beziehungsweise des übertragenen Druckmittels verschiedene Ausbildungen aufwciscn. Dabei ist darauf zu achten, dass der Stoffanschluss und das übertragene Medium entsprechend ausgebildet sind. Durch die Ausbildung des Stoffanschlusses als Luftanschluss oder auch Druckluftanschlusses lässt sich eine Druckluftverbindung auf einfache Weise leicht und ohne großen Aufwand realisieren.

Eine weitere vorteilhafte Ausbildung der Erfindung sieht vor, dass die Kommunikationseinrichtung eine Kommunikationsschnittstelle zur Kontaktierung der als Lichtwellenleiter ausgebildeten Druckmittelschlauchummantelung und der Kommunikationseinrichtung aufweist, wobei die Kommunikationsschnittstelle so ausgebildet ist, dass diese eine im Wesentlichen verschleißfreie Kontaktierung der Druckmittelschlauchummantelung mit der korrespondierenden Kommunikationseinrichtung ermöglicht. Die Schnittstelle kann dabei in die Kommunikationseinrichtung integriert oder als eigenständiges, auswechselbares Modul der Kommunikationseinheit ausgebildet sein. Durch die Schnittstelle lässt sich die Verbindung zwischen Druckmittelschlauch beziehungsweise Druckmittelschlauchummantelung und Kommunikationseinrichtung einfach und kostengünstig herstellen, da insbesondere bei Verwendung einer modularen Schnittstelle, eine genormte und auf ein breites Spektrum von Einsatzgebieten anwendbare Schnittstelle verwendbar ist. Sollte ein Defekt oder eine Beschädigung an der Schnittstelle auftreten oder sonstige Verschleißerscheinungen oder Funktionsstörungen, kann die Schnittstelle einfach aus der Kommunikationseinheit herausgelöst und ausgewechselt werden. Durch Verwendung einer Kommunikationsschnittstelle der vorstehend beschriebenen Art lässt sich demnach ein Höchstmaß an Flexibilität und Kompatibilität erreichen.

Eine weitere, die Erfindung verbessernde Maßnahme sieht vor, dass die Kommunikationsschnittstelle die Druckmittelschlauchummantelung im Wesentlichen umschließt, so dass die Schlauchenden des flexiblen Druckmittelschlauchs kraftschlüssig mit der Kopplungseinheit verbunden sind. Auf diese Weise lässt sich das Schlauchende vor äußeren Einflüssen, etwa durch die das Schlauchende umgebenden Medien optimal schützen, ohne dass dabei deren Funktion beeinträchtigt ist. Weiterhin ist durch die kraftschlüssigc Kopplung eine sichere und zuverlässige Verbindung gewährleistet, welche zudem eine hohe Lebenserwartung aufweist.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: einen schematischen Längsschnitt durch einen erfindungsgemäßen flexiblen Druckmittelschlauch,
- Fig. 2: einen schematischen Querschnitt durch einen erfindungsge mäßen flexiblen Druckmittelschlauch und
- Fig. 3: einen schematischen Längsschnitt durch eine erfindungsgemäße Vonichtung zur Stoff- und Datenübertragung.

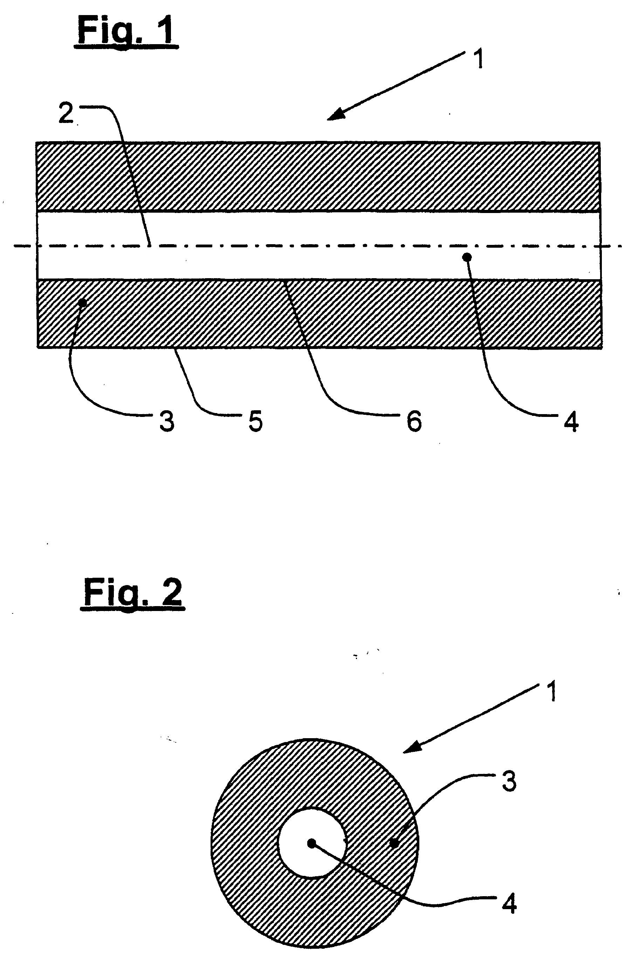

Fig. 1 zeigt einen erfindungsgemäßen flexiblen Druckmittelschlauch 1 in einem schematischen Längsschnitt. Der Druckmittelschlauch 1 erstreckt sich entlang einer Druckmittelschlauchachse 2. Um die Druckmittelschlauchachse 2 weist der Druckmittelschlauch 1 eine Druckmittelschlauchummantelung 3 auf, welche einen Druckmittelschlauchinnenraum 4 umgibt. Weiterhin weist der Druckmittelschlauch 1 in radialer Richtung zu der Druckschlauchmittelachse 2 zwei Oberflächen auf. Eine Oberfläche bildet die Außenseite 5 des Druckmittelschlauchs 1 und grenzt den Druckmittelschlauch 1 von dem den Druckmittelschlauch 1 umgebenden Medium ab. Die zweite Oberfläche bildet die Innenseite 6, welche die Druckmittelschlauchummantelung 3 von dem Druckmittelschlauchinnenraum 4 abgrenzt. Die Druckmittelschlauchummantelung 3 ist aus einem flexiblen, dass heißt verformbaren Lichtwellenleitermaterial hergestellt, so dass innerhalb der Druckmittelschlauchummantelung 3 Lichtwellen übertragbar sind. Die Druckmittelschlauchummantelung 3 weist ein in axialer Richtung zur Druckmittelschlauchachse 2 konstante Wanddicke beziehungsweise Schichtdicke, Stärke oder Wandung auf.

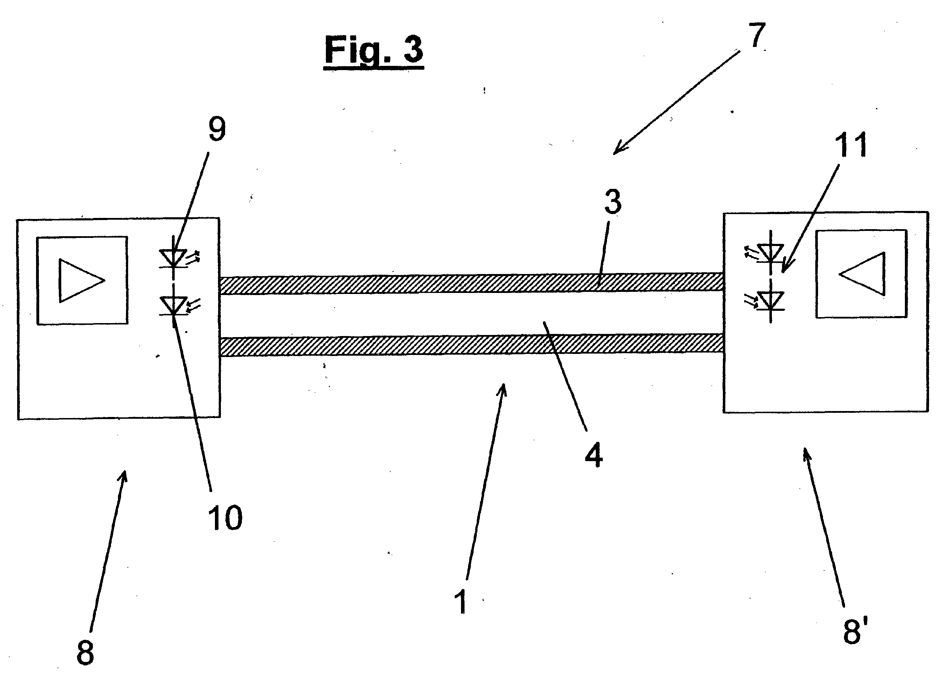

Fig. 2 stellt schematisch einen Querschnitt des erfindungsgemäßen Druckmittelschlauchs 1 dar. Der Druckmittelschlauchinnenraum 4 weist einen zylindrischen Querschnitt auf. Die Druckmittelschlauchummantelung 3 ist konzentrisch um den Druckmittelschlauchinnenraum 4 angeordnet und weist einen hohlzylindrischen Querschnitt auf.

Fig. 3 stellt schematisch einen Längsschnitt durch eine erfindungsgemäße Vorrichtung zur Stoff- und Datenübertragung 7 dar. Die Vorrichtung zur Stoff- und Datenübertragung 7 umfasst einen in den Fig. 1 und 2 bereits dargestellten flexiblen Druckmittelschlauch 1 sowie zwei an den Enden des flexiblen Druckmittelschlauchs 1 angeordnete und mit dem flexiblen Druckmittelschlauch 1 verbundene Kopplungseinheiten 8. Die Enden des flexiblen Druckmittelschlauchs 1 sind dabei mittels einer ersten Schnittstelle (nicht dargestellt) mit der Kopplungseinheit 8 kraftschlüssig verbunden. Die erste Schnittstelle befindet sich auf der dem flexiblen Druckmittelschlauch 1 zugewandten Seite der vorzugsweise quaderförmig ausgebildeten Kopplungseinheit 8. Dabei umschließt die Schnittstelle die Enden des flexiblen Druckmittclschlauchs 1 und wirkt auf den Druckmittelschlauch 1 so ein, dass eine zuverlässige, kraftschlüssige Verbindung entsteht. Über die erste Schnittstelle wird ein Druckmittel dem flexiblen Druckmittelschlauch 1 zugeführt, welcher das Druckmittel über den Druckmittelschlauchinnenraum 4 an die korrespondierende erste Schnittstelle der an dem anderen Ende des flexiblen Druckmittelschlauchs 1 angeordneten Kopplungseinheit 8. Die Kopplungseinheit 8 umfasst neben einer ersten Schnittstelle noch eine zweite Schnittstelle (nicht dargestellt), mit der die Kopplungseinheit 8 mit weiteren Pneumatikbauteilen verbunden ist. Dabei Gewährleisten beide Schnittstellen zusammen eine Übertragung der Daten und des Druckmittels zwischen dem flexiblen Druckmittelschlauch 1 durch die Kopplungseinheit 8 zu den anzuschließenden Pneumatikbauteilen. Die Kopplungseinheit 8 umfasst weiterhin eine einen Sender 9 und einem Empfänger 10 umfassende Kommunikationseinrichtung 11. Der Sender 9 ist als optischer Sender, genauer als Infrarotwellensender ausgebildet, der eine Infrarotdiode umfasst. Die infrarotdiode des Senders 9 ist als Infrarotemitter ausgebildet, welcher Infrarotwellen ausstrahlt, um Informationen in Form von Infrarotlichtwellen zu übertragen. Der Empfänger 10 ist als optischer Empfänger, genauer als Infrarotwellenempfänger ausgebildet, der ebenfalls wie der Sender 9 eine Infrarotdiode umfasst. Im Gegensatz zu der Infrarotdiode des Senders 9 ist die Infrarotdiode des Empfängers 10 als Infrarotrezeptor ausgebildet, um von einem korrespondierenden Infrarotsender Infrarotwellen zu empfangen. Die Infrarotwellen werden jeweils von einer Kopplungseinheit 8 an einem Ende des flexiblen Druckmittelschlauchs 1 an die andere Kopplungseinheit 8 am anderen Ende des flexiblen Druckmittelschlauchs 1 über die Druckmittelschlauchummantelung 3 übertragen. Die beiden korrespondierenden Kopplungseinheiten 8 sind dabei so ausgebildet, dass zwischen beiden Kopplungseinheiten 8 über die Druckmittelschlauchummantelung 3 eine bidirektionale Kommunikation erfolgen kann.

### Bezugszeichenliste

- **1**: Flexibler Druckmittelschlauch
- **2**: Druckmittelschlauchachse
- **3**: Druckmittelschlauchummantelung
- **4**: Druckmittelschlauchinnenraum
- **5**: Außenseite
- **6**: Innenseite
- **7**: Vorrichtung zur Stoff- und Datenübertragung
- **8 , 8'**: Kopplungseinheit
- **9**: Sender
- **10**: Empfänger
- **11**: Kommunikationseinrichtung

## Patentansprüche

1. Flexibler Druckmittelschlauch (1) zur Übertragung eines Druckmittels mit einer Druckmittelschlauchummantelung (3), der außerdem Mittel zur Datenübertragung in axialer Richtung zur Druckmittelschlauchachse (2) umfasst, **dadurch gekennzeichnet,**
**dass** die Druckmittelschlauchummantelung (3) als eine homogene Schicht ausgebildet ist, durch welche in Lichtwellen kodierte Daten übertragbar sind, wobei die homogene Schicht aus einem flexiblen Lichtwellenleitermaterial besteht.

2. Flexibler Druckmittelschlauch (1) nach Anspruch 1, **dadurch gekennzeichnet,**
**dass** das in einem Druckmittelschlauchinnenraum (4) übertragene Druckmittel Druckluft zum Betreiben eines pneumatischen Bauteils ist.

3. Flexibler Druckmittelschlauch (1) nach Anspruch 1 oder 2, **dadurch gekennzeichnet,**
**dass** die Druckmittelschlauchummantelung (3) eine Außenseite (5) und eine Innenseite (6) aufwcist, wobei die in Lichtwellen kodierten Daten im Wesentlichen innerhalb der Druckmittelschlauchummantelung (3) zwischen der Innenseite (6) und der Außenseite (5) verlaufen.

4. Flexibler Druckmittelschlauch (1) nach einem der vorherigen Ansprüche, **dadurch gekennzeichnet,**
**dass** die Innenseite (6) der Druckmittelschlauchummantelung (3) so ausgebildet ist, dass das Druckmittel nicht durch die Innenseite (6) in die homogene Schicht der Druckmittelschlauchummantelung (3) gelangen kann, um eine Trennung zwischen Datenübertragung und Druckmittelübertragung zu realisieren.

5. Flexibler Druckmittelschlauch (1) nach einem der vorherigen Ansprüche, **dadurch gekennzeichnet,**
**dass** die Außenseite (5) der Druckmittelschlauchummantelung (3) so ausgebildet ist, dass das den flexiblen Druckmittelschlauch (1) umgebende Medium nicht durch die Außenseite (5) in die homogene Schicht der Druckmittelschlauchummantelung (3) gelangen kann, um eine Trennung zwischen Datenübertragung und umgebenden Medium zu realisieren.

6. Flexibler Druckmittelschlauch (1) nach einem der vorherigen Ansprüche, **dadurch gekennzeichnet,**
**dass** die Druckmittelschlauchummantelung (3) im Wesentlichen konzentrisch um die Druckmittelschlauchmittelachse ausgebildet ist.

7. Flexibler Druckmittelschlauch nach einem der vorherigen Ansprüche, **dadurch gekennzeichnet,**
**dass** die Druckmittelschlauchummantelung (3) in radialer Richtung zur Druckmittclschlauchachse (2) eine über die Gesamtlänge des flexiblen Druckmittelschlauches (1) im Wesentlichen konstante Schichtdicke aufweist, um einen gleichmäßigen Datenund/oder Druckmittelfluss zu gewährleisten.

8. Flexibler Druckmittelschlauch nach einem der vorherigen Ansprüche, **dadurch gekennzeichnet,**
**dass** der Druckmittelschlauchinnenraum (4) eine zylindrische Querschnittsfläche aufweist, um einen konstanten Druckmittelfluss zu gewährleisten.

9. Vorrichtung zur Druckmittel- und/oder Datenübertragung (7) umfassend einen flexiblen Druckmittelschlauch (1) nach einem der Ansprüche 1 bis 9, **dadurch gekennzeichnet,**
**dass** an jedem Ende des flexiblen Druckmittelschlauchs (1) eine Kopplungseinheit (8) zur Verbindung des flexiblen Druckmittelschlauchs (1) mit weiteren Komponenten insbesondere pneumatischen Bauteilen angeordnet sind, wobei die Kopplungseinheit (8) als Stoffanschluss mit integrierter Kommunikationseinrichtung (11) ausgebildet ist.

10. Vorrichtung zur Stoff- und/oder Datenübertragung nach Anspruch 9, **dadurch gekennzeichnet,**
**dass** die Kommunikationseinrichtung (11) der Kopplungseinheit (8) mindestens einen optischen Sender (9) und mindestens einen optischen Empfänger (10) aufweist, um eine bidirektionale Datenkommunikation zwischen mehreren Kopplungseinheiten (8, 8') zu realisieren.

11. Vorrichtung zur Stoff- und/oder Datenübertragung nach Anspruch 9 oder 10, **dadurch gekennzeichnet,**
**dass** der Sender (9) als Infrarotscndcr und der Empfänger (10) als Infrarotempfänger ausgebildet sind, um mittels Infrarotwellen kodierte Daten zu übertragen.

12. Vorrichtung zur Stoff- und/oder Datenübertragung nach einem der vorherigen Ansprüche 9 bis 11, **dadurch gekennzeichnet,**
**dass** der Sender (9) und/oder der Empfänger (10) der Kommunikationseinrichtung (11) mindestens als eine Infrarotdiodc ausgebildet sind, um in Infrarotwellen kodierte Daten zu übertragen.

13. Vorrichtung zur Stoff- und/oder Datenübertragung nach einem der vorherigen Ansprüche 9 bis 12, **dadurch gekennzeichnet,**
**dass** der Stoffanschluss der Kopplungseinheit (8) als ein Push-In-Fitting ausgebildet ist, um Druckluft zwischen Pneumatikkomponenten zur übertragen.

14. Vorrichtung zur Stoff- und/oder Datenübertragung (7) nach einem der vorherigen Ansprüche 9 bis 14, **dadurch gekennzeichnet,**
**dass** die Kommunikationseinrichtung (11) eine Kommunikationsschnittstelle zur Kontaktierung der als Lichtwellenleiter ausgebildeten Druckmittelschlauchummantelung (3) und der Kommunikationseinrichtung (11) aufweist, wobei die Kommunikationsschnittstelle so ausgebildet ist, dass diese eine im Wesentlichen verschleißfreie Kontaktierung der Druckmittelschlauchummantelung mit der korrespondierenden Kommunikationseinrichtung (11) ermöglicht.

15. Vorrichtung zur Stoff- und/oder Datenübertragung (7) nach Anspruch 14, **dadurch gekennzeichnet,**
**dass** die Kommunikationsschnittstelle die Druckmittelschlauchummantelung (3) im Wesentlichen umschließt, so dass die Schlauchenden des flexiblen Druckmittelschlauchs (1) kraftschlüssig mit der Kopplungseinheit (8) verbunden sind.
